# EUROPEAN PATENT APPLICATION

(11) **EP 4 772 087 A1**
(43) Date of publication of application: **08.07.2026**
(21) Application number: 24860025.6
(22) Date of filing: 07.03.2024
(51) Int. Cl.: A47J 37/06

(54) **AIR-CIRCULATING ELECTRIC ROASTER INCLUDING STRUCTURE FOR UNIFORMIZING TEMPERATURE OF GRILL PAN**

(30) Priority: 30.08.2023 JP 2023139870
(71) Applicant: DNW, LTD, Anyang-si, Gyeonggi-do 14084 (KR)
(72) Inventor: KHANG, Hyunho, Jincheon-gun, Chungcheongbuk-do 27839 (KR)
(74) Representative: Tergau & Walkenhorst Intellectual Property GmbH
(86) International application number: PCT/KR2024/002933
(87) International publication number: WO 2025/048091

(57) **Abstract**

Air-circulating electric roaster includes body, heater for generating heat, fan disposed inside body along first direction of body, cooking plate including at least one first through-hole and heated by heat from heater, air circulation plate including first side wall having air intake part formed to suck air above cooking plate toward body, second side wall having air discharge part formed to discharge air that has passed through interior of body toward upper portion of cooking plate, and bottom including at least one second through-hole, and cooking plate temperature uniformizing structure including insertion member detachably mounted at end portion of air circulation plate on side of second through-hole in order to suppress air flowing below air circulation plate due to operation of fan during cooking from flowing upward to upper portion of area of cooking plate on side of air discharge part through second through-hole.

## Description

### [Technical Field]

The present invention relates to an air-circulating electric roaster including a structure for uniformizing temperature of a grill pan.

### [Background Art]

An electric roaster is an apparatus for cooking food on a cooking plate (grill plate) by providing a cooking plate and a heater in a main body and heating the heater by applying power.

An air-circulating electric roaster has a structure in which a long fan is disposed on one side of a lower portion of the main body and a cooking plate is disposed on an upper portion, and during cooking, the fan is operated to form a predetermined flow of air inside the electric roaster so that smoke is not discharged to the outside and oil is collected into an internal oil tray through oil holes of the cooking plate (see, for example, Korean Patent Laid-Open Publication No. 10-2007-0008383).

That is, in the air-circulating electric roaster, an air intake part and an air discharge part are formed on both side surfaces of an air circulation plate, respectively, and as the fan operates, air is sucked from the cooking plate through the air intake part and discharged through the air discharge part via a lower portion of the air circulation plate.

In the cooking plate (grill plate) used in such an air-circulating electric roaster, at least one through-hole (oil hole) is formed to allow oil to fall downward, thereby forming an air flow path in a vertical direction.

Accordingly, when the fan of the air-circulating electric roaster operates during cooking, air sucked through the air intake part partially flows upward through the through-hole of the cooking plate while passing through the lower portion of the air circulation plate.

In addition, in a conventional air-circulating electric roaster, in order to increase air discharge efficiency, a size of the air discharge part formed in the air circulation plate is formed smaller than a size of the air intake part facing the air discharge part.

However, in a state in which an air flow path inside the air-circulating electric roaster is not completely sealed, a structure in which the size of the air discharge part is formed smaller than that of the air intake part and a structure in which part of the air is discharged upward through the through-hole of the cooking plate may not only result in lowering air discharge efficiency but also cause a result in which a temperature of the cooking plate becomes non-uniform left and right with respect to a center in a longitudinal direction during cooking.

### [Disclosure]

### [Technical Problem]

One technical problem to be achieved by the present invention is to provide a cooking plate temperature uniformizing structure capable of minimizing non-uniformity of a temperature of a cooking plate during cooking in an air-circulating electric roaster.

Another technical problem to be achieved by the present invention is to provide an air-circulating electric roaster including a cooking plate temperature uniformizing structure capable of minimizing non-uniformity of a temperature of a cooking plate during cooking.

The technical problems of the present invention are not limited to those described above, and other technical problems not mentioned herein will be clearly understood by those skilled in the art from the following description.

### [Technical Solution]

According to at least one embodiment of the present invention, there is provided an air-circulating electric roaster including: a body; a heater for generating heat; a fan disposed inside the body along a first direction of the body; a cooking plate including at least one first through-hole and heated by heat from the heater; a first side wall having an air intake part formed to suck air above the cooking plate toward the body; a second side wall having an air discharge part formed to discharge air that has passed through an interior of the body toward the upper portion of the cooking plate; an air circulation plate composed of a bottom including at least one second through-hole; and a cooking plate temperature uniformizing structure including an insertion member detachably mounted at an end portion of the air circulation plate on a side of the second through-hole to suppress air flowing below the air circulation plate due to operation of the fan during cooking from flowing upward to an upper portion of an area of the cooking plate on a side of the air discharge part through the second through-hole.

According to at least one embodiment of the present invention, the first through-hole is formed near a center of the cooking plate, the second through-hole is formed at a position opposite to the first through-hole of the air circulation plate and has a size equal to or larger than that of the first through-hole, and the cooking plate temperature uniformizing structure includes the insertion member configured to be coupled to an end portion of the second through-hole of the air circulation plate along an edge of the second through-hole so as to surround the first through-hole.

According to at least one embodiment of the present invention, the first through-hole is formed near a center of the cooking plate, the second through-hole is formed at a position opposite to the first through-hole of the air circulation plate and has a size equal to or larger than that of the first through-hole, and the cooking plate temperature uniformizing structure includes the insertion member having a funnel shape narrowing downward and coupled to an end portion of the second through-hole of the air circulation plate along an edge of the second through-hole.

According to at least one embodiment of the present invention, the first through-hole is formed near a center of the cooking plate, the second through-hole is formed at a position opposite to the first through-hole of the air circulation plate and has a size equal to or larger than that of the first through-hole, and the cooking plate temperature uniformizing structure includes the insertion member having a funnel shape attached so as to narrow downward along at least a lower side of an edge of the second through-hole in the first direction.

According to at least one embodiment of the present invention, the cooking plate temperature uniformizing structure includes a silicone material.

According to at least one embodiment of the present invention, the first through-hole is formed near a center of the cooking plate, the second through-hole is formed at a position opposite to the first through-hole of the air circulation plate and has a size equal to or larger than that of the first through-hole, and the cooking plate temperature uniformizing structure includes a wind deflection plate positioned below the air circulation plate and inclined or bent downward toward a central portion of the cooking plate.

According to at least one embodiment of the present invention, the air discharge part is formed to have a size equal to or larger than that of the air intake part.

According to at least one embodiment of the present invention, the air-circulating electric roaster further includes a temperature sensor for measuring a temperature of the cooking plate, and the heater is disposed symmetrically left and right with respect to a center line in the first direction of the cooking plate.

According to at least one embodiment of the present invention, the temperature sensor includes a first temperature sensor and a second temperature sensor independently disposed left and right with respect to the center line in the first direction, the heater includes a first heater and a second heater independently disposed left and right with respect to the center line in the first direction, and the cooking plate temperature uniformizing structure includes a structure configured to measure a first temperature on a first side and a second temperature on a second side with respect to the center line in the first direction through the first temperature sensor and the second temperature sensor during cooking and independently control power supplied to the first heater and the second heater according to the measured first temperature and second temperature.

According to at least one embodiment of the present invention, the air circulation plate includes a bottom surface inclined upward from a center toward an outside in at least a direction perpendicular to the first direction, and the fan includes a heat conduction prevention member formed to be adjacent to or in contact with a portion of the inclined bottom surface of the air circulation plate at an upper portion thereof.

Each embodiment described in this specification is described independently; however, the embodiments may be combined with each other, and combined embodiments are also included within the scope of the present invention.

The above summary is provided for explanation only and is not intended to be limiting in any manner. In addition to the above-described illustrative aspects, embodiments, and features, additional aspects, embodiments, and features will become apparent by reference to the drawings and the detailed description below.

### [Advantageous Effects]

According to at least one embodiment of the present invention, it is possible to provide a cooking plate temperature uniformizing structure capable of minimizing non-uniformity of a temperature of a cooking plate during cooking in an air-circulating electric roaster.

In addition, according to at least one embodiment of the present invention, it is possible to provide an air-circulating electric roaster including a cooking plate temperature uniformizing structure capable of minimizing non-uniformity of a temperature of a cooking plate during cooking.

The effects of the present invention are not limited to those described above, and other effects not mentioned herein will be clearly understood by those skilled in the art from the following description.

### [Brief Description of Drawings]

FIG. 1 is a side cross-sectional view of an air-circulating electric roaster according to at least one embodiment of the present invention.
FIG. 2 is a side cross-sectional perspective view of an air-circulating electric roaster according to at least one embodiment of the present invention.
FIGS. 3 to 6 are conceptual views showing an example of a cooking plate temperature uniformizing structure according to at least one embodiment of the present invention.
FIG. 7 is a top view and left and right side views of an air circulation plate of an air-circulating electric roaster according to at least one embodiment of the present invention.
FIG. 8 is a top perspective view showing positional relationships among a cooking plate, a heater, and a temperature sensor of an air-circulating electric roaster according to at least one embodiment of the present invention.
FIGS. 9 and 10 are thermal images showing a temperature uniformization effect of an air-circulating electric roaster including a cooking plate temperature uniformizing structure according to at least one embodiment of the present invention.
FIG. 11 is a conceptual view showing an example of a cooking plate temperature uniformizing structure including left and right independent heaters and temperature sensors according to at least one embodiment of the present invention.
FIG. 12 is a conceptual view showing an example of a lower heat conduction prevention structure according to at least one embodiment of the present invention.

### [Detailed Description]

Hereinafter, embodiments of the present invention will be described in detail with reference to the accompanying drawings.

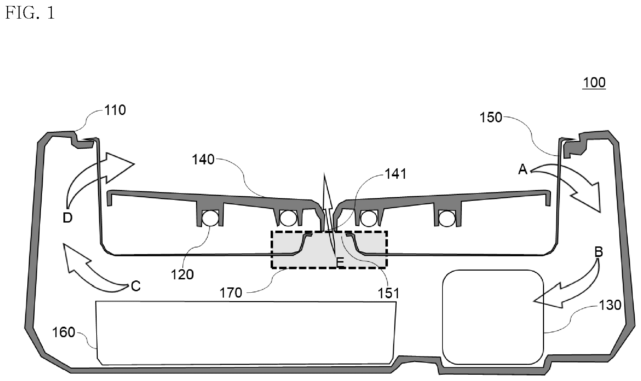

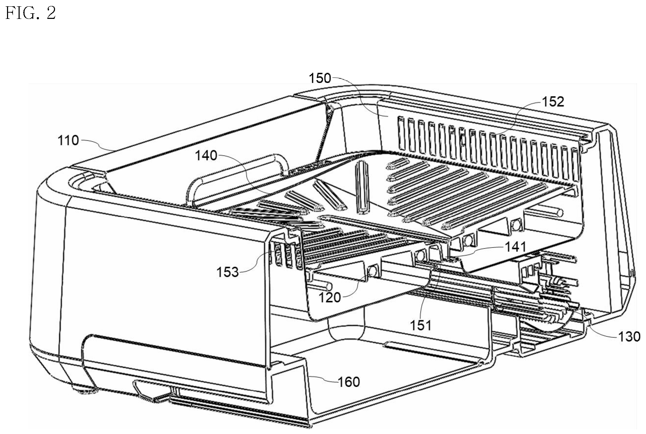

FIG. 1 is a side cross-sectional view of an air-circulating electric roaster 100 according to at least one embodiment of the present invention. FIG. 2 is a side cross-sectional perspective view of an air-circulating electric roaster 100 according to at least one embodiment of the present invention.

As shown in FIGS. 1 and 2, the air-circulating electric roaster 100 according to at least one embodiment of the present invention includes a body 110, a heater 120 for generating heat, a power supply unit (not shown) for supplying power to the heater 120, a fan 130 disposed inside the body 110 along a first direction of the body 110, a cooking plate (grill pan) 140 including at least one first through-hole (oil hole) and installed above the heater 120 to be heated, a first side wall having an air intake part 152 formed to suck air above the cooking plate 140 toward the body 110, a second side wall having an air discharge part 153 formed to discharge air that has passed through the interior of the body 110 toward the upper portion of the cooking plate 140, an air circulation plate 150 composed of a bottom including at least one second through-hole 151, and an oil tray 160.

The body 110 is seated on a floor such as a table or a room floor, includes various components therein to form an overall exterior of the air-circulating electric roaster 100 according to at least one embodiment of the present invention, and the fan 130 is positioned at a lower inner side of the body 110, and from bottom to top, the oil tray 160, the air circulation plate 150, the heater 120, and the cooking plate 140 are sequentially seated.

As illustrated in FIG. 2, the fan 130 mounted inside the body 110 is a long fan having a motor embedded therein, and by operation of the fan 130, internal air is circulated so that smoke generated during cooking (hot air including oil (oil components) and odor) is sucked and only air from which oil and odor are removed is discharged to the outside of the body 110.

That is, as illustrated in FIG. 1, when the fan 130 operates, air above the cooking plate 140 is sucked in a direction of arrow A through the air intake part 152 of the air circulation plate 150, passes above the oil tray 160 through a lower portion of the body 110 in a direction of arrow B, moves to an opposite side surface in a direction of arrow C, and is discharged in a direction of arrow D through the air discharge part 153 of the air circulation plate 150.

According to at least one embodiment of the present invention, the first through-hole 141 is formed near a center of the cooking plate 140, and the second through-hole 151 is formed at a position opposite to the first through-hole 141 of the air circulation plate 150 and is formed to have a size equal to or larger than that of the first through-hole 141.

Accordingly, when internal air circulates through operation of the fan 130, part of the air is discharged upward to the cooking plate 140 through the second through-hole 151 and the first through-hole 141, and part of the air is also discharged through a gap between the second through-hole 151 and the first through-hole 141.

At this time, part of the air discharged upward to the cooking plate 140 through the second through-hole 151 and the first through-hole 141 and part of the air discharged through the gap between the second through-hole 151 and the first through-hole 141 are directed toward the cooking plate 140 on a side of the air discharge part 153 located in a downstream direction, and thus a temperature of the cooking plate 140 on the side of the air discharge part 153 may become lower than a temperature of the cooking plate 140 on a side of the air intake part 152 with respect to a center line in the first direction of the body 110, resulting in a temperature difference between left and right sides of the cooking plate 140.

In order to resolve such non-uniformity in temperature of the cooking plate 140, the air-circulating electric roaster 100 according to at least one embodiment of the present invention further includes a cooking plate temperature uniformizing structure 170 for minimizing non-uniformity in temperature of the cooking plate 140 due to operation of the fan 130 during cooking.

The cooking plate temperature uniformizing structure 170 according to at least one embodiment of the present invention is an air flow resistance portion that reduces a portion of the air discharged upward to the cooking plate 140 through the second through-hole 151 and the first through-hole 141 and part of the air discharged through the gap between the second through-hole 151 and the first through-hole 141, thereby reducing an amount of air directed toward the cooking plate 140 on the side of the air discharge part 153 located in the downstream direction, and thus minimizing a case in which the temperature of the cooking plate 140 on the side of the air discharge part 153 becomes lower than the temperature of the cooking plate 140 on the side of the air intake part 152.

That is, the cooking plate temperature uniformizing structure 170 suppresses air flowing below the air circulation plate 150 from moving upward to an upper portion of an area of the cooking plate 140 on the side of the air discharge part 153 through the second through-hole 151, thereby minimizing a case in which the temperature of the cooking plate 140 on the side of the air discharge part 153 becomes lower than the temperature of the cooking plate 140 on the side of the air intake part 152.

In the example illustrated in FIG. 1, the cooking plate 140 is illustrated as having one through-hole at a central portion or near the center, but this merely illustrates one embodiment, and the present invention is not limited by specific shapes of the body 110, the heater 120, the fan 130, the cooking plate 140, the air circulation plate 150, and the oil tray 160.

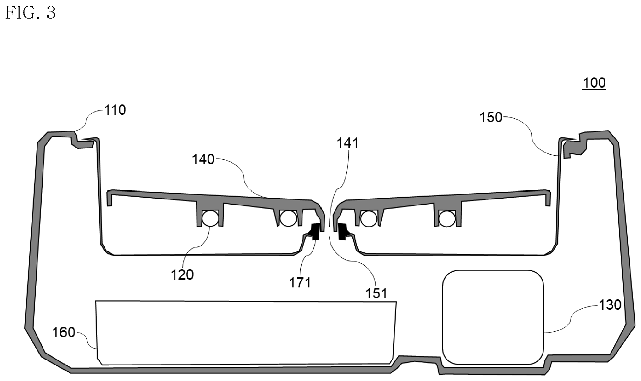

FIGS. 3 to 6 are conceptual views showing an example of the cooking plate temperature uniformizing structure 170 according to at least one embodiment of the present invention.

According to at least one embodiment of the present invention, as illustrated in FIG. 3, the first through-hole 141 is formed near a center of the cooking plate 140, and the second through-hole 151 is formed at a position opposite to the first through-hole 141 of the air circulation plate 150 and has a size equal to or larger than that of the first through-hole 141, and the cooking plate temperature uniformizing structure 170 includes an insertion member 171 in a packing or ring form configured to surround the first through-hole 141 and having a shape capable of being coupled to an end portion of the air circulation plate 150 on a side of the second through-hole 151 along an edge of the second through-hole 151 (for example, an L-shaped form).

The insertion member 171 is fitted into the second through-hole 151 in a state in which an L-shaped portion is coupled to the end portion of the air circulation plate 150 on the side of the second through-hole 151 so as to minimize a gap between the second through-hole 151 and the first through-hole 141, and is formed in a shape surrounding the first through-hole 141 so that an upper portion minimizes a gap with an edge of the first through-hole 141.

Accordingly, the insertion member 171 blocks part of the air discharged between the second through-hole 151 and the first through-hole 141, thereby minimizing a case in which a temperature of the cooking plate 140 on a side of the air discharge part 153 becomes lower than a temperature of the cooking plate 140 on a side of the air intake part 152.

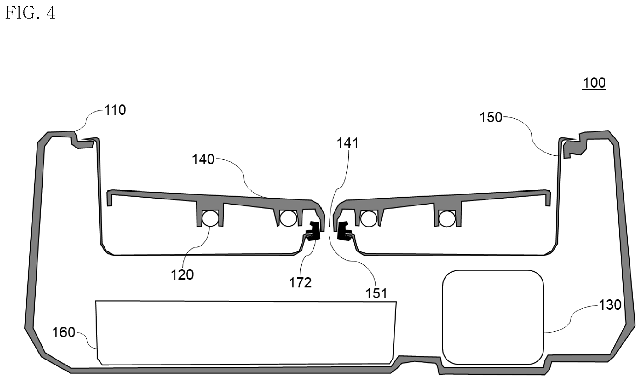

According to at least one embodiment of the present invention, as illustrated in FIG. 4, the first through-hole 141 is formed near a center of the cooking plate 140, and the second through-hole 151 is formed at a position opposite to the first through-hole 141 of the air circulation plate 150 and has a size equal to or larger than that of the first through-hole 141, and the cooking plate temperature uniformizing structure 170 includes an insertion member 172 configured to surround the first through-hole 141 by being coupled in a U-shaped form along an edge of the second through-hole 151.

The insertion member 172 is fitted into the second through-hole 151 in a state in which a U-shaped portion is coupled to the end portion of the air circulation plate 150 on the side of the second through-hole 151 so as to minimize a gap between the second through-hole 151 and the first through-hole 141, and is formed in a shape surrounding the first through-hole 141 so that an upper portion minimizes a gap with an edge of the first through-hole 141.

Accordingly, the insertion member 172 is more firmly coupled along the edge of the second through-hole 151 than the insertion member 171 and blocks part of the air discharged between the second through-hole 151 and the first through-hole 141, thereby minimizing a case in which a temperature of the cooking plate 140 on a side of the air discharge part 153 becomes lower than a temperature of the cooking plate 140 on a side of the air intake part 152.

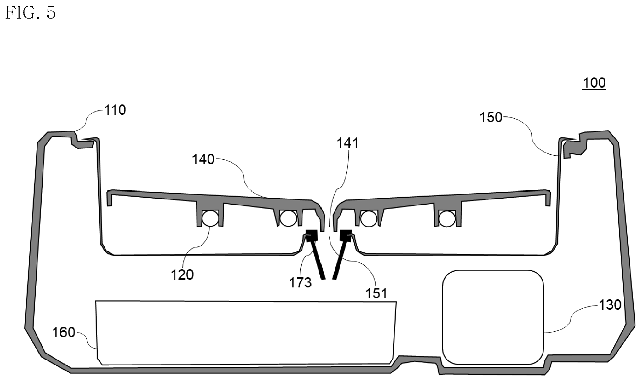

According to at least one embodiment of the present invention, as illustrated in FIG. 5, the first through-hole 141 is formed near a center of the cooking plate 140, and the second through-hole 151 is formed at a position opposite to the first through-hole 141 of the air circulation plate 150 and has a size equal to or larger than that of the first through-hole 141, and the cooking plate temperature uniformizing structure 170 includes a funnel-shaped insertion member 173 narrowing downward and coupled in an L-shaped or U-shaped form along an edge of the second through-hole 151.

The insertion member 173 is fitted to be coupled to the second through-hole 151 in an L-shaped or U-shaped form and is formed in a funnel shape narrowing downward so as to minimize air itself discharged through the second through-hole 151 and the first through-hole 141.

Accordingly, the insertion member 173 blocks not only part of the air discharged between the second through-hole 151 and the first through-hole 141 but also part of the air discharged through the second through-hole 151 and the first through-hole 141, thereby minimizing a case in which a temperature of the cooking plate 140 on a side of the air discharge part 153 becomes lower than a temperature of the cooking plate 140 on a side of the air intake part 152.

According to at least one embodiment of the present invention, the insertion members 171 to 173 may be formed of a flexible, elastic, and heat-resistant material, for example, a silicone material. By forming the insertion members 171 to 173 of a flexible, elastic, and heat-resistant material, attachment and detachment are freely possible from an upper side or a lower side of the second through-hole 151, thereby also providing convenience of cleaning after use.

In the example illustrated in FIG. 5, a funnel-shaped insertion member 173 narrowing downward and coupled in an L-shaped or U-shaped form along an edge of the second through-hole 151 is illustrated, but the inclined portion toward a lower side may be formed to surround an entire edge of the second through-hole 151 or may be formed along the edge of the second through-hole 151 at least in a longitudinal direction.

In addition, instead of the funnel-shaped insertion member 173 narrowing downward and coupled in an L-shaped or U-shaped form along the edge of the second through-hole 151, a funnel-shaped member attached and formed along a lower side of the edge of the second through-hole 151 at least in a longitudinal direction may be used.

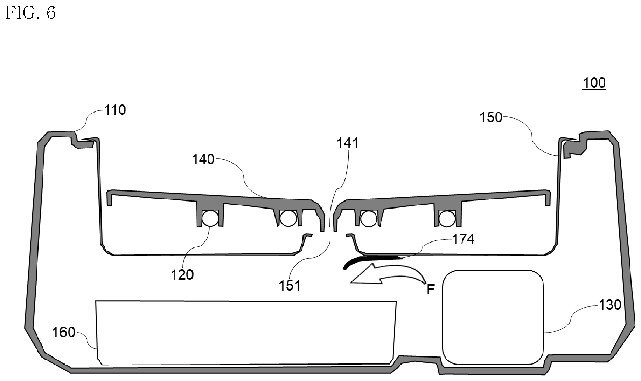

According to at least one embodiment of the present invention, as illustrated in FIG. 6, the first through-hole 141 is formed near a center of the cooking plate 140, and the second through-hole 151 is formed at a position opposite to the first through-hole 141 of the air circulation plate 150 and has a size equal to or larger than that of the first through-hole 141, and the cooking plate temperature uniformizing structure 170 includes a wind deflection plate 174 positioned on an upstream side below a central portion of the air circulation plate 150 and inclined or bent downward toward the side of the second through-hole 151.

That is, the wind deflection plate 174 allows air moving to a lower portion of the body 110 by operation of the fan 130 to be deflected in a direction of arrow F illustrated in FIG. 6, thereby minimizing air itself discharged through the second through-hole 151 and the first through-hole 141.

Accordingly, the wind deflection plate 174 blocks not only part of the air discharged between the second through-hole 151 and the first through-hole 141 but also part of the air discharged through the second through-hole 151 and the first through-hole 141, thereby minimizing a case in which a temperature of the cooking plate 140 on a side of the air discharge part 153 becomes lower than a temperature of the cooking plate 140 on a side of the air intake part 152.

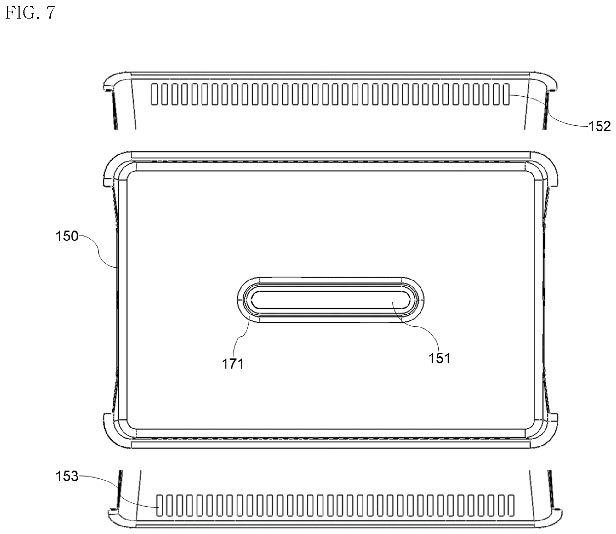

FIG. 7 is a top view and left and right side views of the air circulation plate 150 of the air-circulating electric roaster 100 according to at least one embodiment of the present invention.

As illustrated in FIG. 7, the air intake part 152 and the air discharge part 153 are formed as a plurality of ventilation holes extending long along a longitudinal direction of the body 110, that is, along a longitudinal direction of the fan 130, corresponding approximately to a long-side length of the fan 130.

In a conventional air discharge part 153, in order to increase air discharge efficiency, a size of the air discharge part formed in the air circulation plate is formed smaller than a size of the air intake part facing the air discharge part. This originates from an expectation that if the size of the air discharge part is reduced, discharge pressure of air increases so that air may be discharged more smoothly.

However, when the size of the air discharge part is formed smaller than that of the air intake part in a state in which an air flow path inside the air-circulating electric roaster is not completely sealed, conversely, it may result in lowering air discharge efficiency and may promote a result in which more air is discharged upward through the through-hole of the cooking plate and a temperature of the cooking plate becomes non-uniform left and right with respect to a center in a longitudinal direction during cooking.

According to at least one embodiment of the present invention, a size of the air discharge part 153 is formed equal to or larger than that of the air intake part 152.

By forming the size of the air discharge part 153 equal to or larger than that of the air intake part 152, a flow path of discharged air is secured more widely, thereby minimizing a decrease in discharge efficiency due to discharge pressure that decreases toward the side of the air discharge part 153.

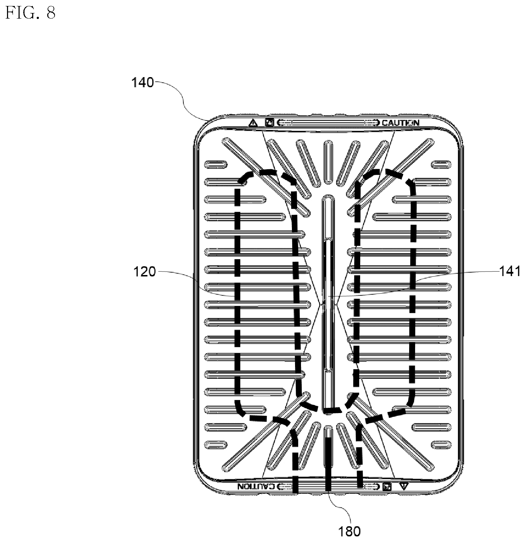

FIG. 8 is a top perspective view showing a positional relationship among the cooking plate 140, the heater 120, and a temperature sensor 180 of the air-circulating electric roaster 100 according to at least one embodiment of the present invention.

According to at least one embodiment of the present invention, the air-circulating electric roaster 100 further includes the temperature sensor 180 for measuring a temperature of the cooking plate 140, and the heater 120 is disposed symmetrically left and right with respect to a center line in the first direction of the cooking plate 140.

The temperature sensor 180 is positioned at one side of a left and right central portion of the cooking plate 140 along the center line in the first direction and measures the temperature of the cooking plate 140 at that position.

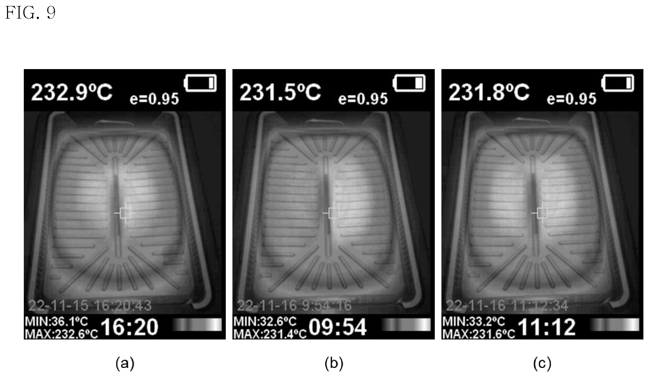

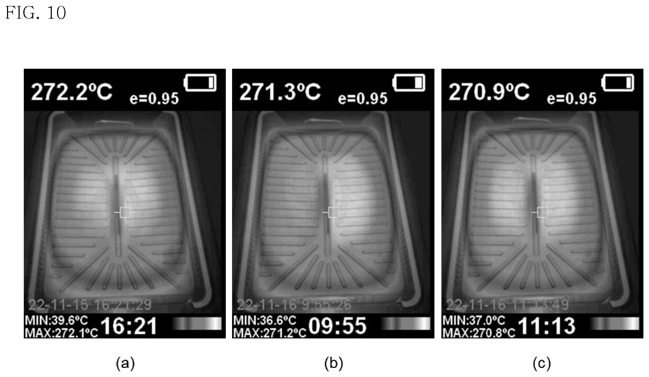

FIGS. 9 and 10 are thermal images showing a temperature uniformization effect of the air-circulating electric roaster 100 including the cooking plate temperature uniformizing structure 170 according to at least one embodiment of the present invention.

FIG. 9 shows thermal images in a state in which the temperature is heated to about 230 degrees Celsius and the fan 130 is not operated (a), a state in which the fan 130 is operated without the cooking plate temperature uniformizing structure 170 according to at least one embodiment of the present invention (b), and a state in which the cooking plate temperature uniformizing structure 170 according to at least one embodiment of the present invention is mounted and the fan 130 is operated (c).

In FIG. 9, with respect to a center line in the first direction (vertical direction in the illustrated example), a left side indicates a side of the air discharge part 153 and a right side indicates a side of the air intake part 152.

As illustrated in FIG. 9(a), in a state in which the fan 130 is not operated, it can be seen that there is almost no difference in heat distribution between left and right sides with respect to the center line in the first direction.

As illustrated in FIG. 9(b), when the fan 130 is operated without the cooking plate temperature uniformizing structure 170 according to at least one embodiment of the present invention, it can be seen that a temperature on the left side, which is the side of the air discharge part 153, becomes lower than a temperature on the right side, which is the side of the air intake part 152.

This is because, as the fan 130 located on the right side, which is the side of the air intake part 152, operates, air is sucked through the air intake part 152 and discharged toward the side of the air discharge part 153, and part of the air discharged between the second through-hole 151 and the first through-hole 141 and part of the air discharged through the second through-hole 151 and the first through-hole 141 have an effect of lowering a temperature of the cooking plate 140 on the left side, which is the side of the air discharge part 153.

As illustrated in FIG. 9(c), when the cooking plate temperature uniformizing structure 170 according to at least one embodiment of the present invention is mounted and the fan 130 is operated, it can be seen that, similar to FIG. 9(a) in which the fan is not operated, there is almost no difference between the temperature on the left side, which is the side of the air discharge part 153, and the temperature on the right side, which is the side of the air intake part 152.

FIG. 10 shows thermal images in a state in which the temperature is heated to about 270 degrees Celsius and the fan 130 is not operated (a), a state in which the fan 130 is operated without the cooking plate temperature uniformizing structure 170 according to at least one embodiment of the present invention (b), and a state in which the cooking plate temperature uniformizing structure 170 according to at least one embodiment of the present invention is mounted and the fan 130 is operated (c).

Similar to the example illustrated in FIG. 9, in the example illustrated in FIG. 10, when the fan 130 is operated without the cooking plate temperature uniformizing structure 170 according to at least one embodiment of the present invention as shown in FIG. 10(b), the temperature on the left side, which is the side of the air discharge part 153, becomes lower than the temperature on the right side, which is the side of the air intake part 152, and when the cooking plate temperature uniformizing structure 170 according to at least one embodiment of the present invention is mounted and the fan 130 is operated as shown in FIG. 10(c), it can be seen that, similar to FIG. 10(a) in which the fan is not operated, there is almost no difference between the temperature on the left side, which is the side of the air discharge part 153, and the temperature on the right side, which is the side of the air intake part 152.

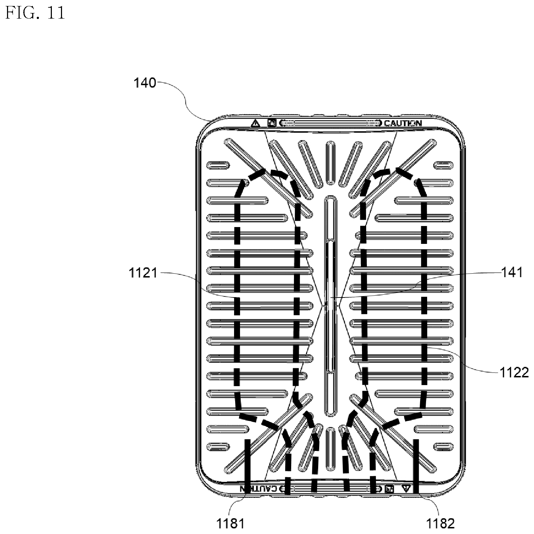

FIG. 11 is a conceptual view showing an example of a cooking plate temperature uniformizing structure including left and right independent heaters and temperature sensors.

According to at least one embodiment of the present invention, as illustrated in FIG. 11, the air-circulating electric roaster 100 includes a first temperature sensor 1181 and a second temperature sensor 1182 independently disposed left and right with respect to a center line in the first direction, and a first heater 1121 and a second heater 1122 independently disposed left and right with respect to the center line in the first direction.

According to at least one embodiment of the present invention, the cooking plate temperature uniformizing structure includes a structure configured to measure a first temperature on a first side and a second temperature on a second side with respect to the center line in the first direction through the first temperature sensor 1181 and the second temperature sensor 1182 during cooking, and independently control power supplied to the first heater 1121 and the second heater 1122 according to the measured first temperature and second temperature.

That is, by independently supplying power to the first heater 1121 and the second heater 1122 on left and right sides, when a difference occurs between the first temperature on the first side and the second temperature on the second side measured through the first temperature sensor 1181 and the second temperature sensor 1182 regardless of whether the fan 130 operates, power supplied to a heater on a lower-temperature side is increased or power supplied to a heater on a higher-temperature side is decreased in comparison with a set temperature, thereby maintaining a uniform temperature distribution of the cooking plate 140.

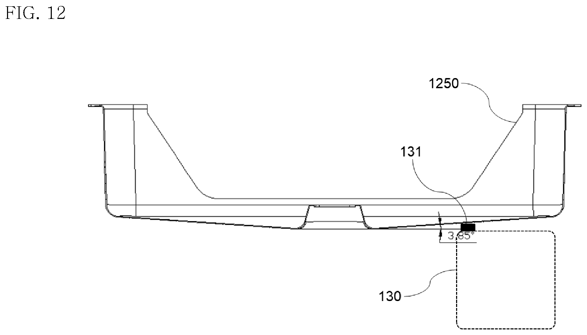

FIG. 12 is a conceptual view of a lower heat conduction prevention structure according to at least one embodiment of the present invention.

In an electric roaster, heat generated by the heater mainly functions to heat the cooking plate above, but heat generated by the heater and heat of the cooking plate heated thereby may be transferred not only upward but also downward, which may cause a reduction in heating efficiency of the cooking plate.

In addition, when heat generated by the heater and heat of the cooking plate heated thereby are also transferred downward, an internal temperature rises, which may cause damage to internal components or malfunction.

In order to solve such problems, the air-circulating electric roaster according to at least one embodiment of the present invention includes, as illustrated in FIG. 12, an air circulation plate 1250 having a bottom surface inclined upward from a center toward an outside at least in a direction perpendicular to a longitudinal direction, and a heat conduction prevention member 131 positioned at an upper portion of the fan 130 and formed to be adjacent to or in contact with a portion of the inclined bottom surface of the air circulation plate 1250 when the air circulation plate 1250 is mounted.

In order to reduce an overall volume of the air-circulating electric roaster, it is necessary to position the air circulation plate as close as possible to the fan, and in this case, if the bottom surface of the air circulation plate is formed flat in a horizontal direction, heat transferred downward through the bottom surface of the air circulation plate increases, which may reduce overall thermal efficiency and cause an increase in internal temperature.

As illustrated in FIG. 12, the lower heat conduction prevention structure according to at least one embodiment of the present invention includes a bottom surface of the air circulation plate 1250 inclined such that a central portion is lowest and becomes higher toward an edge at least in a direction perpendicular to a longitudinal direction, and the heat conduction prevention member 131 positioned at an upper portion of the fan 130, thereby minimizing heat transferred downward through the bottom surface of the air circulation plate.

According to at least one embodiment of the present invention, the heat conduction prevention member 131 may include silicone or a metal member.

As described above, by reducing an amount of air discharged through a central portion of the air circulation plate, non-uniformity of temperature on both sides along a longitudinal direction of the cooking plate may be minimized, and reduction of oil diffusion to surrounding areas due to reduction of air discharge through the central portion, improvement of thermal efficiency, and power-saving effects may be obtained.

For example, reduction of oil diffusion to surrounding areas may be confirmed through experiments using dry ice or cooking under identical or similar conditions by observing oil droplets splashing to surrounding areas, and while in a conventional electric roaster oil components are seen to diffuse to surrounding areas even when the fan is operated, in the air-circulating electric roaster including the cooking plate temperature uniformizing structure according to at least one embodiment of the present invention, it can be confirmed that diffusion of oil components to surrounding areas is significantly reduced when the fan is operated.

Improvement in thermal efficiency may be confirmed through an increase in temperature of the cooking plate, and through experiments it has been confirmed that an equivalent amount of heat may be secured at a temperature setting approximately 10 degrees lower than that of a conventional structure.

As described above, according to at least one embodiment of the present invention, it is possible to provide a cooking plate temperature uniformizing structure capable of minimizing non-uniformity of a temperature of a cooking plate during cooking in an air-circulating electric roaster.

In addition, according to at least one embodiment of the present invention, it is possible to provide an air-circulating electric roaster including a cooking plate temperature uniformizing structure capable of minimizing non-uniformity of a temperature of a cooking plate during cooking.

Although the present invention has been described above using several embodiments, these embodiments are illustrative and not limiting. Those skilled in the art will understand that various changes and modifications may be made according to the doctrine of equivalents without departing from the spirit of the present invention and the scope of rights set forth in the appended claims.

### [INDUSTRIAL APPLICABILITY]

The present invention provides, in an air-circulating electric roaster, a cooking plate temperature uniformizing structure capable of minimizing non-uniformity of a temperature of a cooking plate during cooking in addition to removing smoke, and thus may be applied to fields of home appliances including electric grills.

## Claims

1. An air-circulating electric roaster comprising:
a body;
a heater for generating heat;
a fan disposed inside the body along a first direction of the body;
a cooking plate including at least one first through-hole and heated by heat from the heater;
an air circulation plate including a first side wall having an air intake part formed to suck air above the cooking plate toward the body, a second side wall having an air discharge part formed to discharge air that has passed through an interior of the body toward an upper portion of the cooking plate, and a bottom including at least one second through-hole; and
a cooking plate temperature uniformizing structure including an insertion member detachably mounted at an end portion of the air circulation plate on a side of the second through-hole in order to suppress air flowing below the air circulation plate due to operation of the fan during cooking from flowing upward to an upper portion of an area of the cooking plate on a side of the air discharge part through the second through-hole.

2. The air-circulating electric roaster according to claim 1, wherein
the first through-hole is formed near a center of the cooking plate,
the second through-hole is formed at a position opposite to the first through-hole of the air circulation plate and has a size equal to or larger than that of the first through-hole, and
the cooking plate temperature uniformizing structure includes the insertion member configured to be coupled to an end portion of the second through-hole of the air circulation plate along an edge of the second through-hole so as to surround the first through-hole.

3. The air-circulating electric roaster according to claim 1, wherein
the first through-hole is formed near a center of the cooking plate,
the second through-hole is formed at a position opposite to the first through-hole of the air circulation plate and has a size equal to or larger than that of the first through-hole, and
the cooking plate temperature uniformizing structure includes the insertion member having a funnel shape narrowing downward and coupled to an end portion of the second through-hole of the air circulation plate along an edge of the second through-hole.

4. The air-circulating electric roaster according to claim 1, wherein
the first through-hole is formed near a center of the cooking plate,
the second through-hole is formed at a position opposite to the first through-hole of the air circulation plate and has a size equal to or larger than that of the first through-hole, and
the cooking plate temperature uniformizing structure includes the insertion member having a funnel shape attached so as to narrow downward along at least a lower side of an edge of the second through-hole in the first direction.

5. The air-circulating electric roaster according to any one of claims 2 to 4, wherein the cooking plate temperature uniformizing structure includes a silicone material.

6. The air-circulating electric roaster according to claim 1, wherein
the first through-hole is formed near a center of the cooking plate,
the second through-hole is formed at a position opposite to the first through-hole of the air circulation plate and has a size equal to or larger than that of the first through-hole, and
the cooking plate temperature uniformizing structure includes a wind deflection plate positioned below the air circulation plate and inclined or bent downward toward a central portion of the cooking plate.

7. The air-circulating electric roaster according to claim 1, wherein the air discharge part is formed to have a size equal to or larger than that of the air intake part.

8. The air-circulating electric roaster according to claim 1, further comprising a temperature sensor for measuring a temperature of the cooking plate, wherein
the heater is disposed symmetrically left and right with respect to a center line in the first direction of the cooking plate.

9. The air-circulating electric roaster according to claim 8, wherein
the temperature sensor includes a first temperature sensor and a second temperature sensor independently disposed left and right with respect to the center line in the first direction,
the heater includes a first heater and a second heater independently disposed left and right with respect to the center line in the first direction, and
the cooking plate temperature uniformizing structure includes a structure configured to measure a first temperature on a first side and a second temperature on a second side with respect to the center line in the first direction through the first temperature sensor and the second temperature sensor during cooking and independently control power supplied to the first heater and the second heater according to the measured first temperature and second temperature.

10. The air-circulating electric roaster according to claim 1, wherein
the air circulation plate includes a bottom surface inclined upward from a center toward an outside at least in a direction perpendicular to the first direction, and
the fan includes a heat conduction prevention member formed to be adjacent to or in contact with a portion of the inclined bottom surface of the air circulation plate at an upper portion thereof.
